Europäisches Patentamt

European Patent Office

Office européen des brevets

(11) Veröffentlichungsnummer: **0 070 968**
**B1**

(12) # EUROPÄISCHE PATENTSCHRIFT

(45) Veröffentlichungstag der Patentschrift:
06.11.85

(51) Int. Cl.⁴: **F 16 L 23/00**

(21) Anmeldenummer: **82103289.3**

(22) Anmeldetag: **20.04.82**

(54) **Zentrier- und Tragring für metallgedichtete Flanschverbindungen.**

(30) Priorität: **24.07.81 DE 3129181**

(43) Veröffentlichungstag der Anmeldung:
**09.02.83 Patentblatt 83/6**

(45) Bekanntmachung des Hinweises auf die Patenterteilung:
**06.11.85 Patentblatt 85/45**

(84) Benannte Vertragsstaaten:
**CH FR GB IT LI NL**

(56) Entgegenhaltungen:
**DE - A - 2 416 808**
**DE - C - 1 291 582**
**GB - A - 1 026 714**
**US - A - 2 339 478**
**US - A - 4 192 515**

**Katalog "Komponenten für die Vakuumtechnik",**
**Ausgabe 1979, Firma BALZERS**

(73) Patentinhaber: **Leybold-Heraeus GmbH, Bonner Strasse 504 Postfach 51 07 60, D-5000 Köln 51 (DE)**

(72) Erfinder: **Jokisch, Gerhard, Markusstrasse 121, D-5000 Köln 51 (DE)**
Erfinder: **Kabelitz, Hans-Peter, Dr., Siebengebirgsallee 5a, D-5000 Köln 90 (DE)**
Erfinder: **Plate, Heinz, Händelstrasse 49, D-5000 Köln 1 (DE)**

(74) Vertreter: **Leineweber, Jürgen, Dipl.-Phys., Am Heidstamm 78 a, D-5000 Köln 40 (DE)**

### Beschreibung

Die Erfindung betrifft einen Zentrier- und Tragring für einen Metalldichtring zur Verwendung bei einer metallgedichteten Flanschverbindung, bestehend aus einem bandförmigen federelastischen Material mit in der Dichtungsebene aus dem Band unter Belassung zweier Zentrierränder ausgestanzten, sich in Umfangsrichtung erstreckenden Zungen, die den Metalldichtring unter Vorspannung in Position halten. Ausserdem bezieht sich die Erfindung auf ein Verfahren zur Herstellung des Zentrier- und Tragringes. Metallgedichtete Flanschverbindungen finden insbesondere in der Hochvakuum-Technik häufige Anwendung.

Ein Zentrier- und Tragring der genannten Gattung ist aus dem Katalog «Komponenten für die Vakuumtechnik», Ausgabe 1979, von der Firma Balzers bekannt. Er ist als Federring ausgebildet und hält den Dichtring mittels Federkraft. Dadurch wird vorteilhafterweise erreicht, dass Dicht- und Federring ein voneinander lösbares System bilden, so dass es nicht erforderlich ist, bei jeder Erneuerung der Dichtung auch den Zentrierring mitzuerneuern. Zur Halterung des Dichtringes sind Vorsprünge vorgesehen, die im Vergleich zur Elastizität des Federringes starr sind.

Des weiteren ist aus der DE-A-2416808 ein ebenfalls als Federring ausgebildeter Zentrierring bekannt, der eine konkav gestaltete Stützfläche für den Dichtring aufweist.

Nachteilig an diesen vorbekannten Zentrierringen sind Schwierigkeiten bei der Montage. Ist der Durchmesser des Randes des Zentrierringes bei eingesetztem Metalldichtring so klein gewählt, dass er sich beim Aufsetzen auf einen der beiden miteinander zu verbindenden Flansche wegen des vorhandenen Radialspaltes vergrössert, dann wird dadurch der Kontakt mit dem Metalldichtring aufgehoben, so dass dieser herausfallen kann. Ist der Durchmesser des Randes des Zentrierringes bei eingesetztem Metalldichtring dagegen so gross gewählt, dass er keine Veränderung beim Aufschieben auf einen Flansch erfährt, dann bleibt zwar die Fixierung des Dichtringes im Zentrierring erhalten; eine Halterung des gesamten aus Zentrierring und Dichtring bestehenden Systems an einem Flansch ist aber wegen des Spiels zwischen Zentrierrand und Flansch nicht möglich. Keines der vorbekannten Dichtring-Zentrierring-Systeme ist deshalb für die häufig vorkommende Überkopf-Montage besonders geeignet. Auch bei der Verbindung von Flanschpaaren mit vertikal liegenden Flanschflächen ist es häufig wünschenswert, Zentrier- und Dichtring an einem der Flansche sicher zu fixieren.

Aus der GB-A-1026714 ist schliesslich noch ein Trag- oder Stützring für einen Dichtring bekannt, der nach innen gerichtete Arme zum klemmenden Festhalten des Dichtringes aufweist. Dieser Ring hat weder eine Zentrierfunktion, noch ist er dazu geeignet, auf einen Flansch fixiert zu werden.

Der vorliegenden Erfindung liegt die Aufgabe zugrunde, einen Zentrier- und Tragring der eingangs genannten Art zu schaffen, bei dem die geschilderten Montageschwierigkeiten nicht mehr bestehen.

Erfindungsgemäss wird diese Aufgabe dadurch gelöst, dass der Ring geschlossen ausgebildet ist, dass die zur Halterung des Metalldichtringes in seiner Position notwendige Federkraft von den Zungen erzeugt wird und dass in einem der beiden Zentrierränder mindestens ein weiterer Vorsprung zur Halterung des Zentrier- und Tragringes an einem der miteinander zu verbindenden Flansche vorgesehen ist. Durch diese Massnahmen ist sichergestellt, dass auch bei einer Durchmesserveränderung des für die Zentrierfunktion verantwortlichen Randes des Zentrierringes der Kontakt zwischen den federnden Zungen des Zentrierringes und dem Metalldichtring nicht verloren geht. Bei seitlich und auch bei einer Überkopf-Montage kann deshalb das gesamte aus Dichtring und Zentrierring bestehende System am Flansch ohne die Gefahr des Herausfallens des Dichtringes fixiert werden.

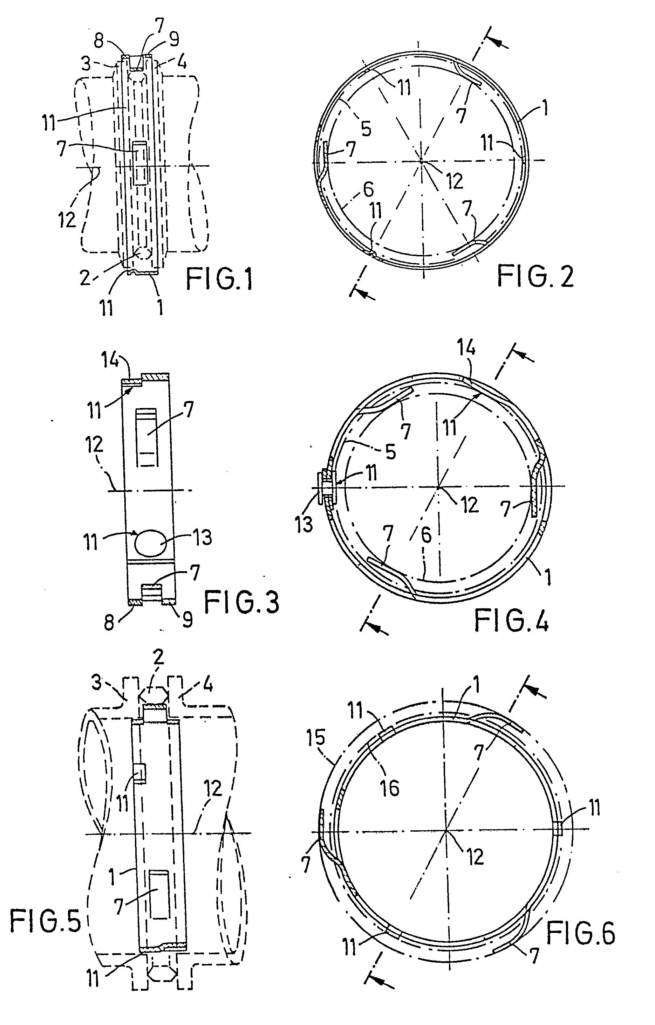

Weitere Vorteile und Einzelheiten der Erfindung sollen anhand von in den Fig. 1 bis 6 dargestellten Ausführungsbeispielen erläutert werden. Die Figuren zeigen jeweils einen Schnitt (Fig. 1, 3 und 5) und jeweils eine teilweise geschnittene Draufsicht (Fig. 2, 4 und 6) von verschiedenen Ausführungsbeispielen nach der Erfindung.

Der in den Fig. 1 und 2 dargestellte Zentrierring 1 dient der Aussenzentrierung eines Metalldichtringes 2, der in Fig. 1 gestrichelt dargestellt ist. Zusätzlich sind in Fig. 1 — ebenfalls gestrichelt — die miteinander zu verbindenden Flansche 3 und 4 dargestellt, zwischen denen mittels des Zentrierringes 1 der Dichtring 2 in der gewünschten Position gehalten wird. Aus Übersichtlichkeitsgründen sind in Fig. 2 lediglich die Aussenlinie des Flansches 3 (strichpunktierter Kreis 5) und die Aussenlinie des Dichtringes 2 (ausgezogene Kreislinie 6) dargestellt.

Für die Halterung und Zentrierung des Dichtringes 2 sind aus dem Ring 1 nach innen ausgeklinkte Federelemente in Form von Zungen 7 vorgesehen, die dem Dichtring 2 im Bereich seiner Aussenlinie 6 federnd anliegen. Die Federkraft und der Federweg sind dabei so gewählt, dass geringfügige Verformung des Ringes 1 keine Lösung des Kontaktes zwischen den Federelementen 7 und dem Dichtring 2 bewirken. Die Zungen 7 liegen etwa in der Mitte des Zentrierringes (bezogen auf die axiale Ausdehnung des Ringes), sind derart ausgestanzt oder herausgeklinkt, dass der Federweg der Zungen 7 in der Ringebene liegt, und entsprechen in ihrer Breite etwa der Stärke des Metalldichtringes 2. Die beiden Randbereiche 8 und 9 umfassen die miteinander zu verbindenden Flansche 3 und 4 und besorgen dadurch die gewünschte Zentrierung.

Um den Zentrierring nach den Fig. 1 und 2 zusätzlich auf einem der beiden Flansche 3 oder 4 (beim dargestellten Ausführungsbeispiel Flansch 3) fixieren zu können, sind im Randbereich 8 drei Vorsprünge 11 vorgesehen, deren Höhe so gewählt ist, dass mit dem Aufschieben des Zentrierringes 1 auf den Flansch 3 gleichzeitig eine Fixierung erzielt wird. Die Vorsprünge 11 können dadurch hergestellt sein, dass der Ring 1 von aussen gekörnt wird. Da die Federwege der Zungen 7 relativ gross sind, verlieren sie beim Aufschieben des Ringes 1 auf den Flansch 3 ihren Kontakt mit der Aussenlinie 6 des Dichtringes 2 nicht. Selbst bei Überkopf-Montage kann deshalb der Dichtring 2 nicht herausfallen. Die Achse des gesamten Systems ist mit 12 bezeichnet.

Das in den Fig. 3 und 4 dargestellte Ausführungsbeispiel unterscheidet sich vom Ausführungsbeispiel nach den Fig. 1 und 2 nicht wesentlich. Es ist ersichtlich, dass der Zentrierring 1 aus Bandmaterial besteht, dessen Enden mittels einer Niete 13 zusammengehalten werden. Diese Niete 13 bildet gleichzeitig einen nach innen gerichteten Vorsprung, der – bei entsprechender Bemessung – allein der Fixierung des Ringes 1 auf einem (bei diesem Ausführungsbeispiel nicht dargestellten) Flansch dienen könnte. Zusätzlich ist jedoch ein weiterer Vorsprung 11 dargestellt, der von einer nach innen herausgeklinkten Zunge 14 gebildet wird, deren Federweg ebenfalls in Ringebene liegt.

In den Fig. 5 und 6 ist ein Zentrierring 1 dargestellt, welcher der Innenzentrierung des Metalldichtringes 2 dient. In Fig. 5 sind wieder die miteinander zu verbindenden Flansche 3 und 4 gestrichelt dargestellt. Da es sich um eine Innenzentrierung handelt, sind in Fig. 6 die innere Linie 15 des Dichtringes 2 und die innere Linie 16 des Flansches 3 dargestellt. Dem Dichtring 2 liegen die aus dem Ring 1 nach aussen herausgeklinkten Zungen 7 stützend an. Auch die Vorsprünge 11 zur Fixierung des Ringes 1 am Flansch bzw. innerhalb des Flansches 3 ragen nach aussen hervor. Sie werden ebenfalls von Zungen gebildet, die senkrecht zu den Zungen 7 ausgebogen sind.

Bei Zentrierringdurchmesser von 30 bis 50 mm ist das Ringmaterial zweckmässigerweise Edelstahl mit einer Stärke von ca. 0,5 mm. Die Länge der Zungen 7 beträgt zweckmässigerweise 5 bis 15 mm bei einer Zungenbreite von 3 bis 4 mm. Bei Abmessungen dieser Grössenordnung wird die gewünschte Elastizität der Federelemente erreicht. Bei derartigen Abmessungen besteht sogar die Möglichkeit, auf die Vorsprünge 11 zu verzichten und statt dessen den Zentrierring 1 als Federring auszubilden. Die dadurch erhaltene Federwirkung soll jedoch ausschliesslich dazu dienen, den Zentrierring 1 auf einem der Flansche 3 oder 4 fixieren zu können. Aufgrund der relativ langen Federwege der den Dichtring 2 stützenden Zungen 7 wird erreicht, dass trotz einer geringfügigen Durchmesser-Veränderung des Zentrierringes 1 beim Aufsetzen auf einen Flansch der Kontakt zwischen den Zungen 7 und dem Dichtring 2 bestehen bleibt. Nachteilig dabei ist allerdings, dass beim Lösen der Flanschpaare nicht sichergestellt ist, auf welchem der beiden Flansche das Dichtsystem verbleibt.

Die Herstellung eines Zentrierringes nach der Erfindung erfolgt zweckmässigerweise dadurch, dass ein gerader Bandmaterialabschnitt gewünschter Länge mit den Federelementen 7 zur Halterung des Dichtringes 2 vesehen wird und erst danach das Rundbiegen erfolgt. Auch das Ausrüsten des Bandmaterialabschnittes mit Vorsprüngen 11 zur Halterung des Zentrierringes 1 an einem Flansch kann – wenn das Werkzeug es gestattet – vor dem Rundbiegen erfolgen. Soll der Ring mittels einer Niete 13 geschlossen werden, dann ist das zweckmässigerweise der letzte Schritt des Herstellverfahrens.

**Patentansprüche**

1. Zentrier- und Tragring (1) für einen Metalldichtring (2) zur Verwendung bei einer metallgedichteten Flanschverbindung (3, 4), bestehend aus einem bandförmigen federelastischen Material mit in der Dichtungsebene aus dem Band unter Belassung zweier Zentrierränder (8, 9) ausgestanzten, sich in Umfangsrichtung erstreckenden Zungen (7), die den Metalldichtring (2) unter Vorspannung in Position halten, dadurch gekennzeichnet, dass der Ring (1) geschlossen ausgebildet ist, dass die zur Halterung des Metalldichtringes (2) in seiner Position notwendige Federkraft von den Zungen (7) erzeugt wird und dass in einem der beiden Zentrierrändern (8, 9) mindestens ein weiterer Vorsprung (11) zur Halterung des Zentrier- und Tragringes (1) an einem der miteinander zu verbindenden Flansche (3, 4) vorgesehen ist.

2. Zentrier- und Tragring nach Anspruch 1, dadurch gekennzeichnet, dass er aus Edelstahl mit einer Stärke von ca. 0,5 mm besteht und dass drei Zungen (7) mit einer Länge von 5 bis 15 mm vorgesehen sind.

3. Zentrier- und Tragring nach Anspruch 1 oder 2, dadurch gekennzeichnet, dass der weitere Vorsprung (11) von einer weiteren ausgestanzten und ausgebogenen Zunge, einer durch Körnung der Gegenseite entstandenen Erhebung oder dergleichen gebildet wird.

4. Zentrier- und Tragring nach Anspruch 1, 2 oder 3, dadurch gekennzeichnet, dass er als Aussenzentrierring ausgebildet ist, d. h. dass die Zungen (7) und der Vorsprung (11) nach innen gerichtet sind.

5. Zentrier- und Tragring nach Anspruch 1, 2 oder 3, dadurch gekennzeichnet, dass er als Innenzentrierring ausgebildet ist, d. h. dass die Zungen (7) und der Vorsprung (11) nach aussen gerichtet sind.

6. Zentrier- und Tragring nach einem der vorhergehenden Ansprüche, dadurch gekennzeichnet, dass er aus rund gebogenem Bandmaterial mit durch mindestens eine Niete (13) verbundenen Enden besteht.

7. Verfahren zur Herstellung eines Ringes nach den Ansprüchen 1, 3 und 6, dadurch gekennzeichnet, dass ein gerader Bandmaterialabschnitt gewünschter Länge mit den Zungen (7) zur Halterung des Dichtringes (2) versehen wird, dass der Bandmaterialabschnitt in einem der Zentrierränder (8, 9) mit dem geprägten (Körnereindruck) oder gestanzten und leicht ausgebogenen Vorsprung (11) zur Halterung des Ringes (1) an einem Flansch (3, 4) versehen wird und dass danach das Rundbiegen und die Vernietung an den Bandenden erfolgen.

## Claims

1. Centering and support ring (1) for a metallic gasket (2) for use in a metallic sealed flanged connection (3, 4), consisting of a ribbon-type resilient material, comprising tongues (7) which are punched out of the ribbon in the sealing plane, two centering edges (8, 9) being left, which tongues extend in peripheral direction and hold the metallic gasket (2) in position under preliminary stress, characterised in that the ring (1) has a closed design, that the elastic force required for mounting the metallic gasket (2) in its position is generated by the tongues (7) and that at least one additional projection (11) is provided in one of the two centering edges (8, 9) for mounting the centering and support ring (1) on one of the flanges (3, 4) to be connected together.

2. Centering and support ring according to claim 1, characterised in that it consists of high grade steel having a thickness of about 0,5 mm and that three tongues (7) are provided, having a length of 5 to 15 mm.

3. Centering and support ring according to either claim 1 or 2, characterised in that the additional projection (11) is formed by an additional punched out and bent tongue, an elevation formed by pitting the opposite side or the like.

4. Centering and support ring according to claim 1, 2 or 3, characterised in that it is designed as an external centering ring, that is to say, that the tongues (7) and the projection (11) are turned inwards.

5. Centering and support ring according to claim 1, 2 or 3, characterised in that it is designed as an internal centering ring, that is to say, that the tongues (7) and the projection (11) are turned outwards.

6. Centering and support ring according to one of the preceding claims, characterised in that it consists of ribbon material bent into a round shape and having the ends joined by at least one rivet (13).

7. Process for the production of a ring according to claims 1, 3 and 6, characterised in that a straight ribbon material section of the desired length is provided with the tongues (7) for mounting the gasket (2), that the ribbon material section is provided in one of the centering edges (8, 9) with the embossed (pitting impression) or punched and slightly bent projection (11) for mounting the ring (1) on a flange (3, 4) and that the operations of bending into a round shape and riveting at the ribbon ends are then carried out.

## Refendications

1. Anneau de centrage et de support (1) pour un joint d'étanchéité métallique annulaire (2) utilisé dans un raccord à brides (3, 4) étanché par un joint métallique, anneau qui est réalisé d'un matériau élastique en forme de bande, dans lequel sont découpées, dans le plan de joint, les languettes (7) orientées dans le sens circonférentiel et poussées hors du plan de la bande, sur laquelle substitent deux bords de centrage (8, 9), les languettes maintenant le joint métallique (2) en position avec précontrainte, caractérisé en ce que l'anneau (1) est fermé, que la force élastique nécessaire pour maintenir le joint métallique (2) à sa position est fournie par les languettes (7) et que l'un des deux bords de centrage (8, 9) présente au moins une saillie supplémentaire (11) pour attacher l'anneau de centrage (1) à l'une des deux brides (3, 4) à assembler.

2. Anneau de centrage et de support selon la revendication 1, caractérisé en ce qu'il est réalisé d'acier fin d'une épaisseur d'environ 0,5 mm et qu'il est pourvu de trois languettes (7) d'une longueur de 5 à 15 mm.

3. Anneau de centrage et de support selon la revendication 1 ou 2, caractérisé en ce que la saillie supplémentaire (11) est formée par une languette supplémentaire découpée et recourbée hors du plan de la bande, par une protubérance formée au moyen d'un pointeau depuis la face opposée de la bande, ou par un moyen analogue.

4. Anneau de centrage et de support selon la revendication 1, 2 ou 3, caractérisé en ce qu'il est réalisé comme un anneau de centrage extérieur, de sorte que les languettes (7) et la saillie (11) sont dirigées vers l'intérieur.

5. Anneau de centrage et de support selon la revendication 1, 2 ou 3, caractérisé en ce qu'il est réalisé comme un anneau de centrage intérieur, de sorte que les languettes (7) et la saillie (11) sont dirigées vers l'extérieur.

6. Anneau de centrage et de support selon une des revendications précédentes, caractérisé en ce qu'il est formé d'un matériau en bande courbé en cercle et dont les extrémités sont reliées l'une à l'autre au moyen d'au moins un rivet (13).

7. Procédé pour fabriquer un anneau selon les revendications 1, 3 et 6, caractérisé en ce que l'on part d'un morceau de bande droite ayant la longueur voulue, dans lequel on forme les languettes (7) pour le maintien du joint d'étanchéité (2), on forme la saillie (11) par empreinte (au pointeau) ou par découpage et faible courbure hors du plan de la bande dans l'un des bords de centrage (8, 9), en vue de l'attache de l'anneau (1) sur l'une des brides (3, 4), et on effectue ensuite le cintrage et le rivetage des extrémités de la bande.

FIG.1

FIG.2

FIG.3

FIG.4

FIG.5

FIG.6